# EUROPEAN PATENT APPLICATION

(11) **EP 2 675 097 A1**
(43) Date of publication of application: **18.12.2013**
(21) Application number: 11858266.7
(22) Date of filing: 11.02.2011
(51) Int. Cl.: H04L 1/18

(54) **DATA TRANSMISSION METHOD, WIRELESS COMMUNICATION SYSTEM, DESTINATION NODE AND RELAY NODE**

(71) Applicant: Fujitsu Limited, Kawasaki-shi, Kanagawa 211-8588 (JP)
(72) Inventor: ZHANG, Yuantao, Beijing 100025 (CN); ZHOU, Hua, Beijing 100025 (CN); WU, Jianming, Beijing 100025 (CN)
(74) Representative: Stebbing, Timothy Charles
(86) International application number: PCT/CN2011/070925
(87) International publication number: WO 2012/106842

(57) **Abstract**

A method for transmitting data, wireless communication system, destination node and relay node. The method comprises: receiving by a destination node at current time slot the data transmitted by at least one source node; demodulating and decoding the data transmitted by the at least one source node to obtain a decoding result; receiving the decoding result transmitted by first relay nodes, the decoding result being obtained by the first relay nodes through demodulating and decoding the data transmitted by the at least one source node and received at the current time slot; and notifying the source node to retransmit the data or transmit new data at the next time slot by the destination node according to the result of the demodulating and decoding of the data of the source node and the decoding result of the first relay nodes. With the embodiments of the present invention, the source nodes are made to transmit data at any time slot, fully using channel resources and avoiding waste of channel resources.

## Description

### Technical Field

The present invention relates to the field of communication, and in particular to a method for transmitting data, wireless communication system, destination node and relay node.

### Background Art

The coordinated communication technology is different from the conventional point-to-point communication, and "a relay node" is introduced in a coordinated communication system to coordinate information transmission from a resource node to a destination node. Therefore, a coordinated communication system contains a source node S, a relay node R and a destination node D.

A coordinated communication system is different from a multi-hop system. Wherein, if there exists no direct link between the source node S and the destination node D, that is, the level of the received signal is lower than a minimum required value, the direct communication between the source node S and the destination node D is impossible, with such a system being referred to as a multi-hop system; and if there exists a direct link between the source node S and the destination node D, such a system is usually referred to as a coordinated system. The difference between the two systems exists in: in a multi-hop system, the communication between the source node S and the destination node D cannot be achieved without the forwarding performed by the relay node R; while in a coordinated system, the direct communication between the source node S and the destination node D can be achieved, and with the help of the relay node R, the performance of communication between the source node S and the destination node D being able to be improved, embodied as improvement of data rate or improvement of success rate.

Currently, in various coordinated communication technologies, the function of the relay node is to forward signals from the source node S. The manners of forwarding may comprise non-regenerative relay (amplify-and-forward (AF)) degenerative relay (decode-and-forward (DF)). Wherein, in the AF, the signals transmitted by the relay node R are directly amplified received signals. The advantage of AF is simple in processing, and the disadvantage of AF is that the received noise is also amplified together while forwarding signals. In the DF, the relay node R decodes the received signals first, then transmits the signals being encoded and modulated once more. The advantage of DF is that the noise in the received signals may be eliminated, and the disadvantage of DF is that its receiver needs more powerful processing capability in relative to that ofAF.

Hybrid automatic repeat request (HARQ) combines forward error correction (FEC) technology and automatic repeat request (ARQ) technology, and is a widely used technology, which may improve output and transmission reliability of the system [6]. In the HARQ technology, information to be transmitted is first encoded into one codeword by the relay node R using error control coding, and then the codeword is transmitted to the destination node D after being modulated; the destination node D performs corresponding decoding and judges whether the decoding output is correct using cyclical redundancy check or according to the properties of the code itself; and if the decoding is incorrect, the source node S is required to retransmit. Currently, the most basic retransmission request information is acknowledgement (ACK) and not acknowledgement (NACK), respectively denoting success or failure of decoding.

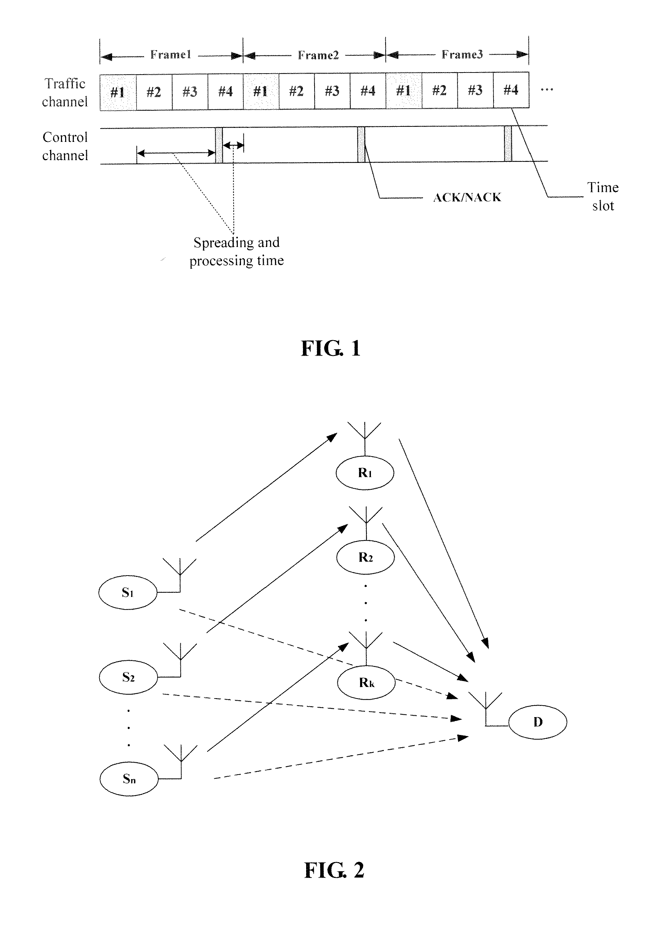

Figure 1 is a schematic diagram of a channel with 4 time slots. Wherein a typical processing manner is to divide the channel into frames base on time, each frame being divided into N time slots, numbered from 1 to N. In all the frames, the time slots with the same number constitute a sub-channel, referred to as an ARQ sub-stream or an ARQ sub-process. As shown in Fig. 1, N=4, i.e. there are 4 ARQ sub-streams, which operate in time-division multiplexing. Taking the first sub-stream as an example, the source node S transmits codewords at time slot #1 of frame 1. After receiving the decoded codes, the destination node D transmits back an ACK/NACK instruction before the next time slot, i.e. time slot #1 of frame 2. Then the source node S performs receiving decoding on the instruction, and prepares the contents to be transmitted at time slot #1 of frame 3, which may be new data, and may also be retransmitted previous data.

The HARQ technology may be applicable to a coordinated communication system with a relay node. In an existing HARQ system without relay cooperation, wrong codewords may only be retransmitted by the source node S. In an HARQ system with with relay cooperation, the relay node R may also assist in the retransmission.

However, in the implementation of the present invention, the inventors found that following defects exist in the prior art: as existing HARQ methods with relay cooperation are all based on DF [2], the source node S cannot transmit new codewords at the retransmission time slots, like that in a system with no relay node. Therefore, the space-time dimension brought by the retransmission time and the relay node R cannot be fully used, resulting in waste of channel resource to a certain extent.

Following documents are listed for the easy understanding of the present invention and conventional technologies, which are incorporated herein by reference as they are fully stated in this text.
[1] T.M.Cover, A. El. Gamal, "Capacity theorems for the relay channel", IEEE Transaction on Information Theory , vol IT-25, pp. 572-584, Sept.1979.
[2] J. N. Laneman, D.N.C. Tse and G. W. Wornell, "Cooperative Diversity in wireless Networks: Efficient protocols and outage behavior", IEEE Transaction on Information Theory, vol 50, pp. 3062-3080, Dec.2004.
[3] Yinan Qi, Reza Hoshyar, Rahim Tafazolli. "A New ARQ Protocol for Hybrid DF/CF Relay Scheme", IEEE Vehicular Technology Conference, Spring 2009. pp. 1-5
[4] I. Byun, D. Rhee, Y. J. Sang, M. Y. Kang, K. S. Kim, "Performance analysis of a decode-and-forward based hybrid-ARQ protocol", IEEE Military Communications Conference (MILCOM'08), 16-19 Nov. 2008, pp. 1-5.
[5] I. Stanojev, O. Simeone, Y. Bar-Ness and C. You, "Performance of Multi-Relay Collaborative Hybrid-ARQ Protocols over Fading Channels", IEEE Communications Letters, vol. 10, no. 7, pp. 522-524, Jul. 2006.
[6] Shu Lin Costello, D. Miller, M, "Automatic-repeat-request error-control schemes", IEEE Communications Magazine, vol. 22, no. 12, Dec. 1984
[7] D. Chase, "Code combining - A maximum-likelihood decoding approach for combining an arbitrary number of noisy packets", IEEE Transaction Communication, vol. 33, no. 5, pp. 385-393, May. 1985.
[8] A Sendonaris, E Erkip, B Aazhang, "User cooperation diversity. Part1. System description", Communications, IEEE Transactions on Volume 51, Issue 11, Nov. 2003.

### Summary of the Invention

An object of the present invention exists in provide a method for transmitting data, wireless communication system, destination node and relay node. In this method, a destination node decides action of a source node S and a relay node R at the next time slot according to a decoding result of data from the source node at the current time slot and the decoding result of the data from the source node at the current time slot transmitted by the relay node, so that the source node S transmits data at any time slot, avoiding waste of channel resources, with the method being good in compatibility.

According to an aspect of the embodiments of the present invention, there is provided a method for transmitting data, comprising:
receiving by a node at current time slot the data transmitted by at least one source node;
demodulating and decoding the data transmitted by the at least one source node to obtain a decoding result;
receiving the decoding result transmitted by first relay nodes, the decoding result being obtained by the first relay nodes through demodulating and decoding the data transmitted by the at least one source node and received at the current time slot; and
notifying the source node to retransmit the data or new data at the next time slot by the destination node according to the result of the demodulating and decoding of the data of the source node and the decoding result of the first relay nodes.

According to another aspect of the embodiments of the present invention, there is provided a destination node, comprising:
a first receiving unit to receive at current time slot the data transmitted by at least one source node;
a first processing unit to demodulate and decode the data transmitted by the at least one source node and received by the first receiving unit to obtain a decoding result;
a second receiving unit to receive the decoding result transmitted by first relay nodes, the decoding result being obtained by the first relay nodes through demodulating and decoding the data transmitted by the at least one source node and received at the current time slot; and
a first message notifying unit to notify the at least one source node to retransmit the data or new data at the next time slot according to the decoding result of the first processing unit and the decoding result received by the second receiving unit.

According to a further aspect of the embodiments of the present invention, there is provided a wireless communication system, comprising:
a source node to transmit data;
a first relay node to receive the data transmitted by the source node and to demodulate and decode the data to obtain a decoding result and transmit the decoding result; and
a destination node to receive the data transmitted by the source node and to demodulate and decode the data to obtain a decoding result; and to receive the decoding result transmitted by the relay node, and to notify the one source node to retransmit the data or transmit new data at the next time slot according to the decoding result obtained through demodulating and decoding the data of the source node and the decoding result of the first relay node.

According to still another aspect of the embodiments of the present invention, there is provided a method for transmitting data, comprising:
receiving by a destination node at current time slot the data transmitted by at least one source node;
demodulating and decoding the data transmitted by the at least one source node to obtain a decoding result; and
notifying the decoding result to the at least one source node, so that the at least one source node decides to retransmit the data or transmit new data at the next time slot according to the decoding result transmitted by the destination node and the decoding result transmitted by a third relay node.

According to still another aspect of the embodiments of the present invention, there is provided a method for transmitting data, comprising:
receiving by a third relay node at current time slot the data transmitted by at least one source node;
demodulating and decoding the data transmitted by the at least one source node to obtain a decoding result;
notifying the decoding result to the at least one source node and a destination node.

According to still another aspect of the embodiments of the present invention, there is provided a method for transmitting data, comprising:
transmitting data to a destination node and third relay nodes at current time slot;
receiving the decoding result obtained by the destination node and the third relay nodes through demodulating and decoding the data; and

According to still another aspect of the embodiments of the present invention, there is provided a destination node, comprising:
a fourth receiving unit to receive at current time slot the data transmitted by at least one source node;
a third processing unit to demodulate and decode the data transmitted by the at least one source node to obtain a decoding result; and
a fourth message notifying unit to notify the at least one source node the decoding result of the third processing unit, so that the at least one source node decides to retransmit the data or transmit new data at the next time slot according to the decoding result transmitted by the destination node and the decoding result transmitted by the third relay node.

According to still another aspect of the embodiments of the present invention, there is provided a relay node, comprising:
a sixth receiving unit to receive at current time slot the data transmitted by at least one source node;
a fourth processing unit to demodulate and decode the data received by the sixth receiving unit to obtain a decoding result; and
a sixth message notifying unit to notify the at least one source node and the destination node the decoding result of the fourth processing unit, so that the source node to decide to retransmit the data or transmit new data at the next time slot according to the decoding result of the notifying unit and the decoding result transmitted by the destination node, thereby causing the destination node to notify the relay node to transmit the data of the source node or to be in a monitoring state at the next time slot according to the decoding result of the notifying unit and the decoding result of the destination node.

According to still another aspect of the embodiments of the present invention, there is provided a source node, comprising:
a transmitting unit to transmit data from a source node at current time slot to a destination node and third relay nodes;
a seventh receiving unit to receive the decoding result obtained by the destination node and the third relay nodes through demodulating and decoding the data; and
a fifth processing unit to determine according to the decoding result received by the seventh receiving unit that the source node retransmits the data or transmits new data at the next time slot.

According to still another aspect of the embodiments of the present invention, there is provided a wireless communication system comprising the source node, the relay node and the destination node above-mentioned.

According to still another aspect of the embodiments of the present invention, there is provided a computer-readable program, wherein when the program is executed in a destination node, the program enables the computer to carry out the method for transmitting data as described above in the destination node.

According to still another aspect of the embodiments of the present invention, there is provided a storage medium in which a computer-readable program is stored, wherein the computer-readable program enables the computer to carry out the method for transmitting data as described above in a destination node.

According to still another aspect of the embodiments of the present invention, there is provided a computer-readable program, wherein when the program is executed in a relay node, the program enables the computer to carry out the method for transmitting data as described above in the relay node.

According to still another aspect of the embodiments of the present invention, there is provided a storage medium in which a computer-readable program is stored, wherein the computer-readable program enables the computer to carry out the method for transmitting data as described above in a relay node.

According to still another aspect of the embodiments of the present invention, there is provided a computer-readable program, wherein when the program is executed in a source node, the program enables the computer to carry out the method for transmitting data as described above in the source node.

According to still another aspect of the embodiments of the present invention, there is provided a storage medium in which a computer-readable program is stored, wherein the computer-readable program enables the computer to carry out the method for transmitting data as described above in a source node.

The advantage of the present invention exists in that the destination node decides action of a source node S and a relay node R at the next time slot according to a decoding result of data from the source node at the current time slot and the decoding result of the data from the source node at the current time slot transmitted by the relay node, so that the source node S transmits data at any time slot, avoiding waste of channel resources.

Particular embodiments of the invention have been disclosed in detail with reference to the following description and drawings and are indicative of some of the ways in which the principles of the invention may be employed, but it is understood that the invention is not limited correspondingly in scope. Rather, the invention includes all changes, modifications and equivalents coming within the spirit and terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

The above and other objects, features and advantages of the present invention will be apparent from the following detailed description in conjunction with the drawings, in which:
Figure 1 is a schematic diagram of a channel with 4 time slots;
Figure 2 is a schematic structural diagram of the wireless communication system with relay cooperation of an embodiment of the present invention;
Figure 3 is a flowchart of the method for transmitting data of the first embodiment of the present invention;
Figure 4 is a flowchart of the decoding of the jointly encoded data by the destination node of the embodiment of the present invention;
Figure 5 is a schematic structural diagram of the destination node of the second embodiment of the present invention;
Figure 6 is a schematic structural diagram of the destination node of the third embodiment of the present invention;
Figure 7 is a schematic structural diagram of the second message notifying unit of the third embodiment of the present invention;
Figure 8 is a time sequence diagram of the HARQ system without relay cooperation in the prior art;
Figure 9 is a time sequence diagram of the HARQ system with relay cooperation of the fourth embodiment of the present invention;
Figure 10 is a schematic diagram of the working principle of the HARQ system with relay cooperation of the fourth embodiment of the present invention;
Figure 11 is a flowchart of the method for transmitting data of the fifth embodiment of the present invention;
Figure 12 is a schematic structural diagram of the destination node of the sixth embodiment of the present invention;
Figure 13 is a flowchart of the method for transmitting data of the seventh embodiment of the present invention;
Figure 14 is a schematic structural diagram of the relay node of the eighth embodiment of the present invention;
Figure 15 is a flowchart of the method for transmitting data of the ninth embodiment of the present invention;
Figure 16 is a schematic structural diagram of the source node of the tenth embodiment of the present invention;
Figure 17 is a time sequence diagram of the HARQ system with relay cooperation of the eleventh embodiment of the present invention;
Figure 18 is another time sequence diagram of the HARQ system with relay cooperation of the eleventh embodiment of the present invention; and
Figure 19 is still another time sequence diagram of the HARQ system with relay cooperation of the eleventh embodiment of the present invention.

### Detailed Description of the Invention

The embodiments of the present invention are described as follows with reference to the drawings. These embodiments are illustrative only, and are intended to limit the present invention. For easy understanding of the principle and embodiments of the present invention by those skilled in the art, the embodiments of the present invention shall be described taking a HARQ with assistance of relay as an example. However, it should be understood the present invention is not limited thereto, and is also applicable to any wireless communication systems where assistance of relay is concerned.

In addition, the embodiments of the present invention are highly compatible with the prior art. As to systems where DF-based HARQ (DF-HARQ) and HARQ based on a space-time block code (STBC) (STBC-HARQ) have been implemented, the implementation of the embodiments of the present invention needs no change of the source node S and the protocols in the system, and only the detection algorithms and control units in the relay node R and the destination node D need to the be updated.

In the embodiments of the present invention, the source node S may be a user equipment (UE), the destination node D may be a base station, and the relay node R may be a specific station that is specially set up, and may also be another UE that is temporarily commandeered. For the ease of explanation, it is assumed in this text that the relay node is a specific station which has no data of itself needing to be transmitted or needs not to be a destination of data of other users, and which has its own capability of signal processing and relatively reasonable geographical position. However, such an assumption does not exclude that the system temporarily commandeers another UE as a relay station, with the premise being that the technical functions specified in the present invention have been implemented in the temporarily commandeered equipment.

In the embodiments of the present invention, the "time slot" refers to a time unit for transmitting a codeword (data), that is, a transmission time interval (TTI) in some technological standards. Except that no data may be transmitted or except the case where the system is prohibited, the source node S is always transmitting codewords at any time slot, thereby effectively using the channel resources. At any time slot, in all the relay nodes R, some are transmitting and some are receiving. In the embodiments of the present invention, the relay nodes in a receiving state are referred to as monitoring relay nodes, and the relay nodes in a transmitting state are referred to as retransmission relay nodes.

Fig. 2 is a schematic structural diagram of the wireless communication system with relay cooperation of an embodiment of the present invention. As shown in Fig. 2, the system comprises a source node, a relay node and a destination node. Wherein, the nodes in the system may be multiple. Following description is given taking one destination node, one or more source nodes and one or more relay nodes as an example. As shown in Fig. 2, the system comprises n source nodes, S1,...Sn, k relay nodes, R1,...Rk, and a destination node D. In the relay nodes R1,...Rk, a part of them are retransmission relay nodes in a transmitting state, and the part of them are monitoring relay nodes in a receiving state.

As shown in Fig. 2, straight lines with arrows denote the existing wireless links. Wherein, a radio signal transmitted by any node is actually spread in the space in a broadcasting manner. Therefore, a radio signal transmitted by any node can reach any other node. All the nodes in this embodiment have a function of wirelessly receiving and transmitting signals, and at least have an antenna. If the number of the source nodes simultaneously in communication is greater than 1, the relay nodes R or the destination node D may have multiple antennas, so as to produce a function of space division multiple access. However, this is not necessary for the implementation of the present invention.

In the embodiments of the present invention, such a scenario may correspond to the uplink communication of a cellular system. However, the present invention is not only applicable to a cellular system.

The method for transmitting data of an embodiment of the present invention shall be described below taking the system shown in Fig. 2 as an example.

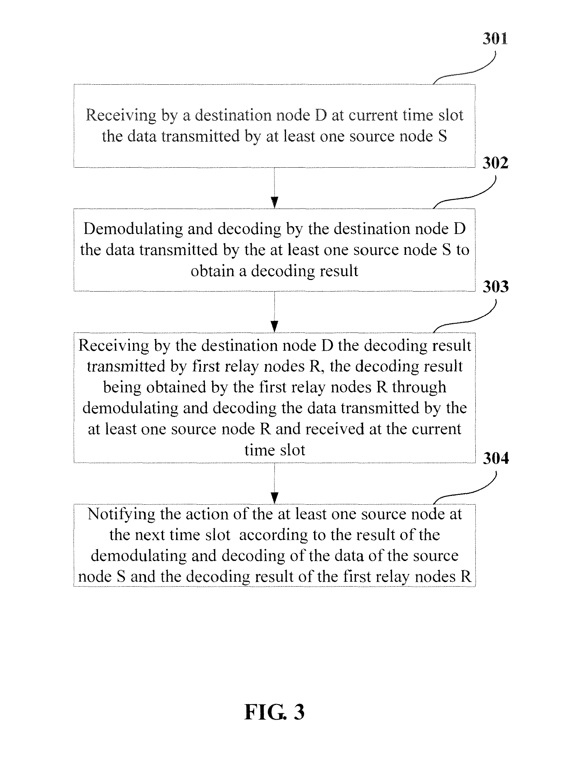

Fig. 3 is a flowchart of the method for transmitting data of the first embodiment of the present invention. As shown in Fig. 3, the method comprises:
step 301: receiving by a destination node D at current time slot the data transmitted by at least one source node S;
step 302: demodulating and decoding by the destination node D the data transmitted by the at least one source node S to obtain a decoding result;
step 303: receiving by the destination node D the decoding result transmitted by first relay nodes R, the decoding result being obtained by the first relay nodes R through demodulating and decoding the data transmitted by the at least one source node R and received at the current time slot; and
step 304: notifying the action of the at least one source node at the next time slot, that is, to retransmit the data or to transmit new data at the next time slot, by the destination node D according to the result of the demodulating and decoding of the data of the source node S and the decoding result of the first relay nodes R.

It can be seen from the above embodiment that the destination node D notifies the action of the at least one source node at the next time slot, that is, the action at the next TTI according to the result of the demodulating and decoding of the data transmitted by the source node S and the decoding result transmitted by the first relay nodes, so that the source nodes S always transmit data at any time slot, thereby effectively using the channel resources.

In this embodiment, the first relay nodes R receive the data transmitted by the at least one source node S at the current time slot, obtain a decoding result by demodulating and decoding the data, and transmit the decoding result to the destination node D. At the current time slot, the first relay nodes R are monitoring relay nodes.

In this embodiment, in executing step 304, the destination node D further notifies the action of the first relay nodes R at the next time slot, that is, to transmit the data or to be in the monitoring state at the next time slot, according to the result of the demodulating and decoding of the data of the source node S and the decoding result of the first relay nodes R. Wherein if the first relay nodes R are in the monitoring state at the next time slot, the first relay nodes R are monitoring relay nodes; and if the first relay nodes R transmit the data at the next time slot, the first relay nodes R are retransmission relay nodes.

For example, if the destination node D correctly decodes the data transmitted by all the source nodes at the current time slot, all the first relay nodes at the current time slot will still be in the monitoring state at the next time slot; and if a certain first relay node does not correctly decode the data transmitted by any source node at the current time slot, the first relay node will still be in the monitoring state at the next time slot.

For example, if a certain first relay node correctly decodes the data transmitted by a certain source node at the current time slot and at the same time, the destination node D does not correctly decode the data, the first relay node will be in an alternative retransmitting state at the next time slot.

For each of the data that is not correctly decoded by the destination node D, the destination node D will set up an alternative relay set for the data according to the decoding result, such as ACK/NACK, transmitted by each of the first relay nodes. And then a relay node is selected from them to transmit the data at the next time slot. If the alternative relay set of the data is empty, a corresponding source node is notified to retransmit the data at the next time slot.

In this embodiment, for clearly describing the method for transmitting data of the present invention, following description is given taking that the destination node D notifies the action of a source node of the at least one source node, such as source node S1, at the next time slot, i.e. the next TTI, according to the result of decoding of the data transmitted by the source node S and the decoding result transmitted by the first relay nodes, as an example. Cases of other source nodes are similar to this.

In this embodiment, in step 304, if the destination node D determines that the result of decoding by the destination node D or at least one of the first relay nodes R the data transmitted by the source node S1 at the current time slot is correct, the destination node D notifies the source node S1 to transmit new data at the next time slot.

Wherein the source node S1 may be notified via ACK signalling denoting correct receiving; however, it is not limited thereto, and other signalling may be employed to transmit for different protocols. In this way, when the source node S1 receives the ACK message transmitted by the destination node D, it may determine to transmit new data at the next time slot.

In this embodiment, in step 304, if the data transmitted by the source node S1 at the current time slot is correctly decoded by the destination node D and the data transmitted by the source node S1 at the current time slot is incorrect decoded by the first relay nodes, the destination node D still notifies the source node S1 to transmit new data at the next time slot.

Wherein the source node S1 may be notified via ACK signalling denoting correct receiving, and the source node S1 receives the ACK signalling and learns that the data transmitted by it at the current time slot are correctly decoded, and hence the source node S1 determines to transmit new data at the next time slot.

In this embodiment, in step 304, if the data transmitted by the source node S1 at the current time slot is incorrectly decoded by the destination node D and the data transmitted by the source node S1 at the current time slot is correctly decoded by at least one of the first relay nodes, the destination node D notifies the source node S1 to transmit new data at the next time slot.

Wherein, the source node S1 may be notified via ACK signalling denoting correct receiving.

Furthermore, the destination node D transmits NACK signalling to the first relay node which correctly decodes the data transmitted by the source node S1, so that the first relay node, after receiving the NACK signalling, determines to transmit at the next time slot the data transmitted by the source node S1 at the current time slot. In this way, the first relay node is transformed into a retransmission relay node at the next time slot.

In this embodiment, in step 304, if the data transmitted by the source node S1 at the current time slot are incorrectly decoded by both the destination node D and at least one of the first relay nodes, the destination node D notifies the source node to retransmit at the next time slot the data transmitted at the current time slot.

Wherein, the source node S1 may be notified via NACK signalling denoting incorrect receiving. In this way, when the source node S1 receives the NACK signalling and learns that the data transmitted at the current time slot are not correctly received, it determines to retransmit the data at the next time slot.

In this embodiment, the destination node D notifies the first relay node which correctly decodes the data transmitted by the source node S1 to retransmit the data of the source node at the next time slot, with the following manner being used: determining by the destination node D according to the decoding result of the first relay node a set of the first relay nodes which correctly decode the data of the source node S1; and selecting a first relay node from the set of the first relay nodes, and notify the selected first relay node to transmit the data of the source node at the next time slot. Therefore, the first relay node is transformed into a retransmission relay node at the next time slot.

Wherein the selecting a first relay node from the set of the first relay nodes comprises: selecting a first relay node of good channel quality from the set of the first relay nodes; or selecting a first relay node which correctly decodes the data transmitted by a number of source nodes from the set of the first relay nodes.

In this embodiment, when the destination node D receives the data transmitted by at least one source node, the method may further comprise:
receiving the data transmitted by a second relay node at current time slot by the destination node D, the data transmitted by the second relay node being those that are transmitted by the second relay node notified by the destination node D at the time slot prior to the current time slot, such as the last time slot; wherein the data are transmitted by at least one source node at the last time slot to the second relay node, and the second relay node correctly decodes the data at the last time slot;
decoding by the destination node D the data transmitted by the second relay node; and
notifying the source nodes to which the data transmitted by the second relay node belong to transmit new data at the next time slot, or notifying the source nodes to which the data transmitted by the second relay node belong to retransmit the data at the next time slot, or notifying part of the source nodes to which the data transmitted by the second relay node belong to transmit new data at the next time slot and notifying the other part of the source nodes to retransmit the data at the next time slot, according to the decoding result.

Wherein if the data transmitted by the second relay node are all correctly decoded by the destination node D, the destination node D notifies the source nodes to which the data transmitted by the second relay node belong to transmit new data at the next time slot; if the results are all incorrect, the source nodes to which the data transmitted by the second relay node belong are notified to retransmit the data at the next time slot; and if part of the results are correct and part of the results are incorrect, the source nodes to which the correctly decoded data belong are notified to transmit new data at the next time slot, and the source nodes to which the incorrectly decoded data belong are notified to retransmit the data at the next time slot.

In the above embodiment, the destination node D may further store the soft Information of the source bits transmitted by the at least one source node.

In this embodiment, when the data transmitted by the second relay node to the destination node D are from more than one source nodes S, the second relay node may jointly encode the source bits of the more than one source nodes, and then transmit the jointly encoded data to the destination node D. Wherein, the manner of jointly encoding may be the same as the manner of encoding of the data packets transmitted by a corresponding source node at the last time slot, for example, it may be Turbo coding, or convolutional coding, etc., which may be carried out in any existing manner, and shall not be described any further.

Therefore, the following manner may be employed when the destination node D decodes the data transmitted by the second relay node.

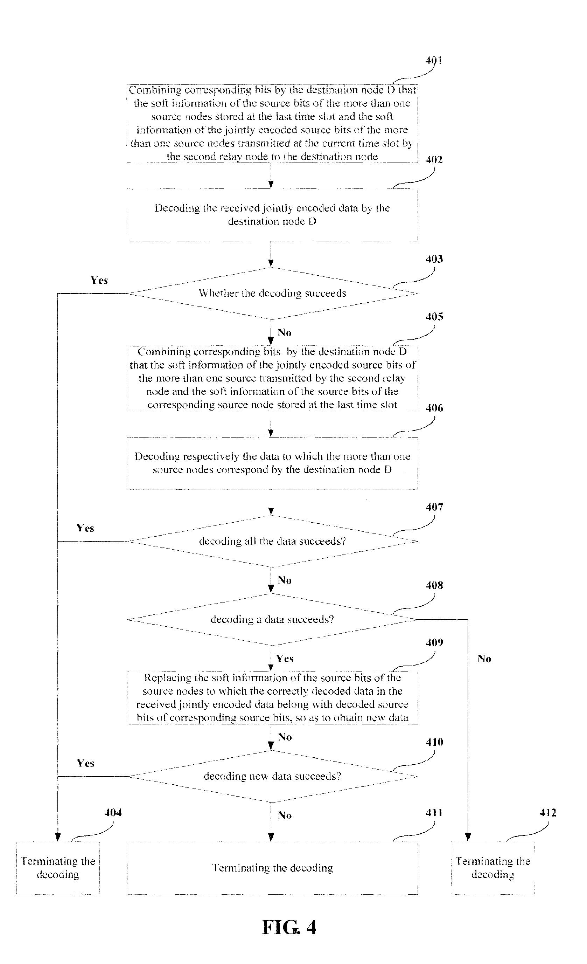

Fig. 4 is a flowchart of the decoding of the jointly encoded data by the destination node of the embodiment of the present invention. Wherein the soft information of the source bits stored corresponding to the time slot prior to the current time slot is needed to be used, and if the current time slot is the *n-th* time slot, time slot prior to the current time slot is the *(n-k)-th* time slot; where, k is a natural number. The description herein is given taking a preceding time slot neighboring the current time slot as an example.

As shown in Fig. 4, the process comprises the steps of:
step 401: combining corresponding bits, by the destination node D, that the soft information of the source bits of the more than one source nodes stored at the last time slot and the soft information of the jointly encoded source bits of the more than one source nodes transmitted at the current time slot by the second relay node to the destination node;
wherein simple adding or weighted adding may be used in combining; and the source bits are combined herein, as the check bits with jointly encoding are different from the check bits with separately encoding, while the source bits are identical;
step 402: decoding the received jointly encoded data by the destination node D;
step 403: judging whether the decoding succeeds, and if the result of judgment is positive, executing step 404; otherwise, executing step 405;
step 404: if the decoding succeeds in step 403, determining by the destination node D that the decoding is correct, and terminating the process of decoding; hence, the destination node D transmits ACK signalling to the at least one source node, so that the at least one source node transmits new data at the next time slot;
step 405: if the decoding does not succeed in step 403, combining corresponding bits, by the destination node D, that the soft information of the jointly encoded source bits of the more than one source transmitted by the second relay node and the soft information of the source bits of the corresponding source node stored at the last time slot;
wherein simple adding or weighted adding may be used in combining;
step 406: decoding respectively the data to which the more than one source nodes correspond by the destination node D;
step 407: judging whether the data from the at least one source node are all successfully decoded, and if the result of judgment is positive, executing step 404; otherwise, executing step 408;
step 408: further judging whether the data from one of the source nodes is successfully decoded, and if the result of judgment is positive, executing step 409; otherwise, executing step 412;
step 409: replacing, the soft information of the source bits of the source nodes to which the correctly decoded data in the received jointly encoded data belong, with decoded source bits of corresponding source bits, so as to obtain new data;
step 410: decoding the obtained new data; and if the decoding succeeds, executing step 404; otherwise, executing step 411;
step 411: if the decoding succeeds, terminating the decoding by the destination node, notifying by the destination node to the corresponding source nodes decoding correctly to transmit new data at the next time slot, and notifying to the corresponding source nodes decoding incorrectly to retransmit corresponding data at the next time slot, according to the decoding result; and
step 412: if the decoding does not succeed in step 408, terminating the decoding by the destination node, and notifying by the destination node to the at least one source node to retransmit corresponding data at the next time slot according to the decoding result.

It can be seen from the above embodiment that the destination node D may decide action of the source node S and the relay node R at the next time slot according to a decoding result of data from the source node S at the current time slot and the decoding result of the data from the source node S at the current time slot transmitted by the relay node, so that the source node S transmits data at any time slot, avoiding waste of channel resources, with the method being good in compatibility.

An embodiment of the present invention further provides a destination node as described in the embodiment below. As the principle of the destination node for solving problems is similar to that of the method for transmitting data, the implementation of the method may be referred to for the implementation of the destination node, and the repeated parts shall not be described herein any further.

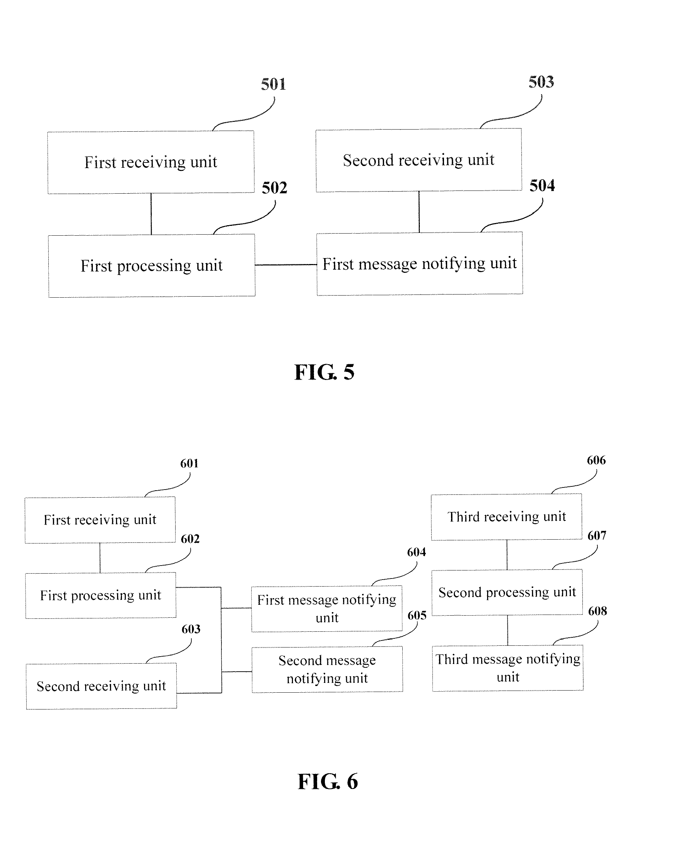

Fig. 5 is a schematic structural diagram of the destination node of the second embodiment of the present invention. As shown in Fig. 5, the destination node comprises: a first receiving unit 501, a first processing unit 502, a second receiving unit 503 and a first message notifying unit 504; wherein,
the first receiving unit 501 is configured to receive at current time slot the data transmitted by at least one source node; the first processing unit 502 is configured to demodulate and decode the data transmitted by the at least one source node and received by the first receiving unit 501 to obtain a decoding result; the second receiving unit 503 is configured to receive the decoding result transmitted by first relay nodes, the decoding result being obtained by the first relay nodes through demodulating and decoding the data transmitted by the at least one source node and received at the current time slot; and the first message notifying unit 504 is configured to notify the source node to retransmit the data or new data at the next time slot according to the decoding result of the first processing unit 502 and the decoding result received by the second receiving unit 503.

In this embodiment, the manner of operation of the first message notifying unit 504 is as described in the first embodiment, which shall not be described herein any further.

It can be seen from the above embodiment that the destination node D may decide action of the source node S at the next time slot according to a decoding result of data from the source node at the current time slot and the decoding result of the data from the source node at the current time slot transmitted by the relay node, so that the source node S transmits data at any time slot, avoiding waste of channel resources, with the method being good in compatibility.

Fig. 6 is a schematic structural diagram of the destination node of the third embodiment of the present invention. As shown in Fig. 6, the destination node may comprise: a first receiving unit 601, a first processing unit 602, a second receiving unit 603 and a first message notifying unit 604, with the functions of them being the same as the corresponding parts shown in Fig. 5, which shall not be described herein any further.

As shown in Fig. 6, the destination node further comprises a second message notifying unit 605 configured to notify the first relay node to transmit the data at the next time slot or to be in a monitoring state according to the decoding result of the first processing unit 601 and the decoding result received by the second receiving unit 603.

It can be seen from the above embodiment that the destination node decides not only the action of the source node at the next time slot, but also the action of the first relay node. A particular manner of deciding is as described in the first embodiment, which shall not be described herein any further.

In this embodiment, for clearly describing the method for transmitting data of the present invention, following description is given taking that the destination node D notifies the action of a source node of the at least one source node at the next time slot, i.e. the next TTI, according to the result of decoding of the data transmitted by the source node S and the decoding result transmitted by the first relay nodes, as an example. Cases of other source nodes are similar to this.

In this embodiment, the first message notifying unit 604 notifies the first relay node which correctly decodes the data transmitted by the source node S1 to retransmit the data of the source node at the next time slot, with the following manner being used: determining, according to the decoding result of the first relay node, a set of the first relay nodes which correctly decode the data of the source node S1; and selecting a first relay node from the set of the first relay nodes, and notify the selected first relay node to transmit the data of the source node at the next time slot.

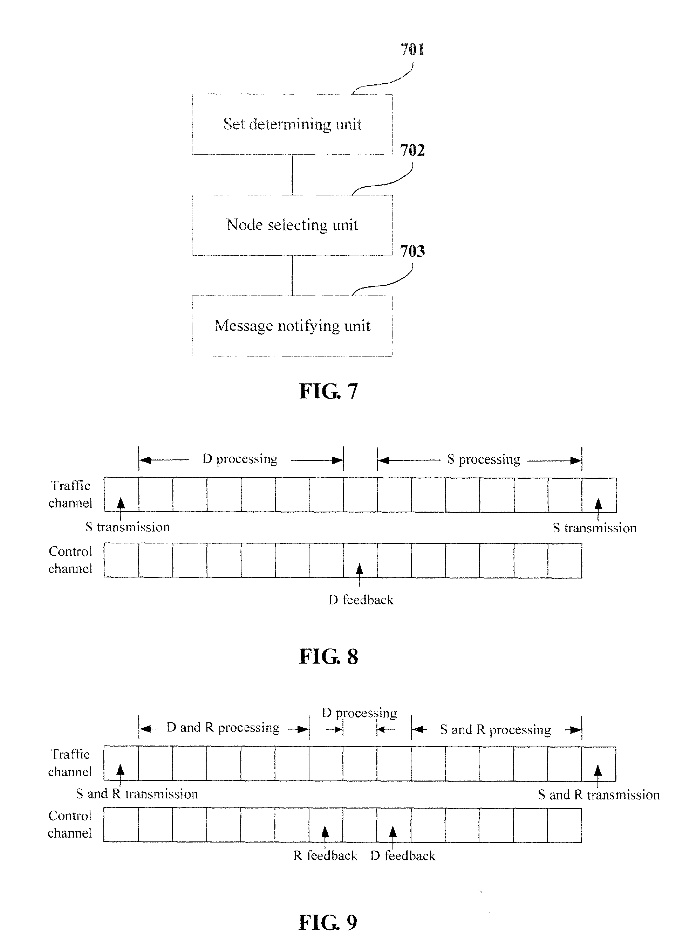

Fig. 7 is a schematic structural diagram of the second message notifying unit of the third embodiment of the present invention. For the sake of clear description, as described in the first embodiment, following description is given taking the action of a source node at the next time slot as an example.

As shown in Fig. 7, the second message notifying unit comprises: a set determining unit 701, a node selecting unit 702 and a message notifying unit 703; wherein,
the set determining unit 701 is configured to determine a set of the first relay nodes that correctly decode the data of the one source node according to the decoding result of the first relay nodes;
the node selecting unit 702 is configured to select one first relay node from the set of the first relay nodes determined by the set determining unit 701; and
the message notifying unit 703 is configured to notify the selected one first relay node to transmit the data of the one source node at the next time slot.

It can be seen from the above embodiment that for each of the data that are incorrectly decoded by the destination node D, the destination node D will set up an alternative relay set for the data according to the decoding result, such as ACK/NACK, transmitted by each of the monitoring relay nodes. And then a relay node is selected from them to transmit the data at the next time slot. If the alternative forwarding relay set of the data is empty, a corresponding source node is notified to retransmit the data at the next time slot.

Wherein when there exist multiple source nodes, a certain monitoring relay node may be taken as an alternative retransmitting node only if it is able to correctly decode the codewords of at least one source node. If a monitoring relay node correctly decodes the codewords of multiple source nodes, when it is selected as a retransmission relay node, it will simultaneously forward all the successfully decoded codewords in a superposition manner. If the relay node has multiple antennas, multiple codewords may be distributed in the multiple antennas (like multiple relays) to be transmitted.

Furthermore, when an alternative set of relay nodes of a certain data contains multiple relay nodes, the destination node D may flexibly select a relay node used for forwarding. A strategy for selection may comprise: (i) preferentially selecting a relay node of good channel quality; and (ii) preferentially selecting a relay node correctly decoding data of maximum number of source nodes, so that more relay nodes are saved for monitoring.

As shown in Fig. 6, the destination node further comprises: a third receiving unit 606, a second processing unit 607 and a third message notifying unit 608; wherein,
the third receiving unit 606 is configured to receive the data transmitted by a second relay node, the data transmitted by the second relay node being those that are transmitted by the second relay node notified by the destination node at the time slot prior to the current time slot ;
the second processing unit 607 is configured to decode the data transmitted by the second relay node; and
the third message notifying unit 608 is configured to notify the source nodes to which the data transmitted by the second relay node belong to transmit new data at the next time slot when the decoding is correct, and to notify the source nodes to which the data transmitted by the second relay node belong to retransmit the data at the next time slot when the decoding is incorrect.

It can be seen from the above embodiment that if the destination node D correctly decodes the data currently transmitted by the second relay node, i.e. a certain retransmission relay node, the retransmission relay node is changed into a monitoring state at the next time slot; otherwise, the retransmission relay node proceeds with retransmitting the data at the next time slot.

When there exist multiple source nodes, it is possible that a monitoring relay node (the first relay node described above) correctly decodes the data of the multiple source nodes. Hence, it is possible that the retransmission relay node simultaneously forwards the data of the multiple source nodes at the current time slot. At this moment, if the destination node D correctly decodes only a part of the data forwarded by the retransmission relay node, the relay node proceeds with retransmitting the data that are not correctly decoded by the destination node D at the next time slot.

It can be seen from the above embodiment that the destination node D may decide action of the source node S and the relay node R at the next time slot according to a decoding result of data from the source node S at the current time slot and the decoding result of the data from the source node S at the current time slot transmitted by the relay node, so that the source node S transmits data at any time slot, avoiding waste of channel resources, with the method being good in compatibility.

The fourth embodiment of the present invention further provides a wireless communication system. As shown in Fig. 2, the wireless communication system comprises: a source node, relay node and a destination node; wherein,
the source node is configured to transmit data;
the first relay node is configured to receive the data transmitted by the source node and to demodulate and decode the data to obtain a decoding result and transmit the decoding result; and
the destination node is configured to receive the data transmitted by the source node and to demodulate and decode the data to obtain a decoding result; and to receive the decoding result transmitted by the relay node, and to notify the at least one source node to retransmit the data or transmit new data at the next time slot according to the decoding result obtained through demodulating and decoding the data of the source node and the decoding result of the first relay node.

In this embodiment, the first relay node may be a monitoring relay node.

Furthermore, the relay node comprises a second relay node configured to transmit to the destination node the data that are transmitted at the last time slot by the second relay node which is notified by the destination node. The second relay node is a retransmission relay node at the current time slot.

Wherein, the construction of the destination node is as described in the second and third embodiments, which shall not be described herein any further.

For the first relay node, it receives at the current time slot the data transmitted by at least one source node, and modulates and decodes the data to obtain a decoding result; and transmits the decoding result to the destination node. Therefore, the first relay node may comprise: a data receiving unit configured to receive at the current time slot the data transmitted by at least one source node; a data processing unit configured to modulate and decode the data to obtain a decoding result; and a message transmitting unit configured to transmit the decoding result to the destination node.

For the second relay node, it transmits to the destination node at the current time slot the data transmitted by at least one source node at a time slot prior to the current time slot, such as the last time slot, the data referring to that the second relay node correctly decodes the data.

In this embodiment, the numbers of the source nodes, the relay nodes and the destination nodes are not limited, and may be one or more.

The function process of the wireless communication system of the embodiment of the present invention shall be described below in comparison with the prior art by way of examples. Fig. 8 is a time sequence diagram of the HARQ system without relay cooperation in the prior art, and Fig. 9 is a time sequence diagram of the HARQ system with relay cooperation of the fourth embodiment of the present invention.

As shown in Fig. 8, in prior art, the source node S transmits data first, and the destination node D receives the data at the same time. The destination node D starts to perform demodulation, decoding and other processing after receiving the last sample of the signal transmitted by the source node S, and then obtains a decoding result. If the decoding is correct, ACK signalling is transmitted to the source node S, and if the decoding is incorrect, NACK signalling is transmitted to the source node. After the signalling signal completely reaches the source node S, the source node S starts decoding and prepares the signals to be transmitted at the next time slot. The signals to be transmitted by the source node S may be new data, or retransmission of the original data. Generally speaking, the time taken by "S processing" in Fig. 8 is far less than that taken by "D processing", as the destination node D needs to spend much time in demodulating and decoding, especially for modem encoding and high-order modulation, and multiple antennas equipped cases.

As shown in Fig. 9, in the embodiment of the present invention, "S and R transmission" denotes that one or more source nodes and possibly one or more retransmission relay nodes transmit signals in parallel in a traffic channel at the time slot. "D and R processing" denotes that a destination node and monitoring relay nodes respectively demodulate and decode received signals. After the decoding is terminated, all the monitoring relay nodes transmit ACK/NACK signalling to the destination node D via a control channel. "D processing" thereafter denotes that the destination node D decodes the signalling, and prepares a process "D feedback" feeding back signalling. In general, the time needed in signalling decoding and processing is far less than that needed in decoding user data. After receiving the feedback signalling of each of the relay nodes, the destination node D decides the action of each of the source nodes and each of the relay nodes at the next time slot according to what is described in the above protocol. "S and R processing" denotes that the source nodes and the relay nodes decode the ACK/NACK signalling of the destination node D, and prepare for the next time slot.

When there exist multiple relay nodes, multiple monitoring relay nodes may parallelly transmit ACK/NACK signalling. At this moment, each of the nodes must employ a certain multi-access manner (such as a manner of spread spectrum, time division, or frequency division), so that the destination node D may recognize the source of the signalling. Likewise, the retransmission instructions transmitted by the destination node D to each of the nodes must be transmitted in a multiplexing or multi-access manner.

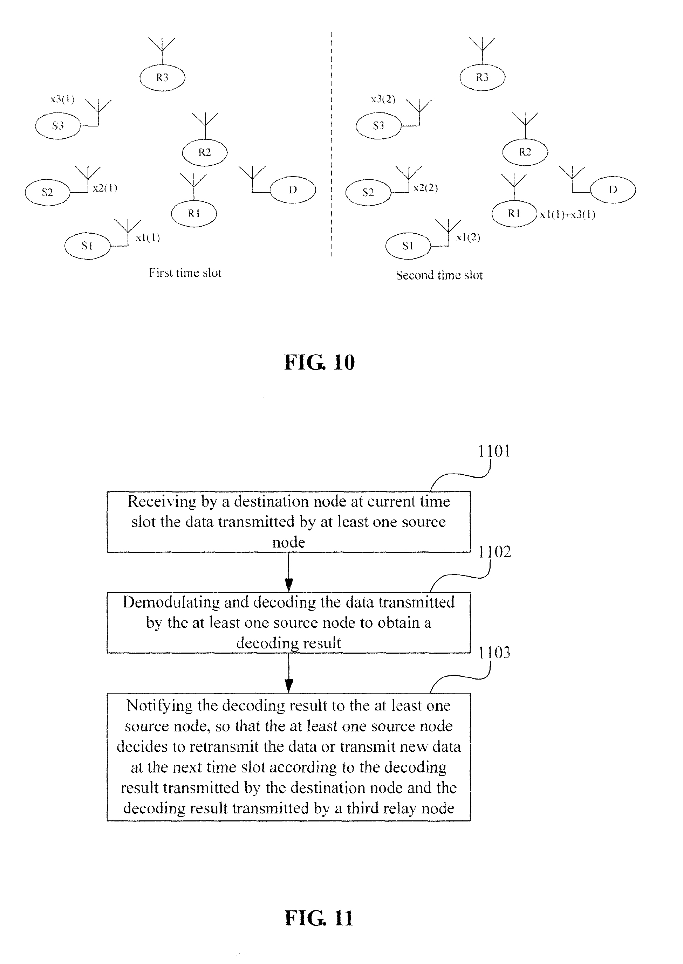

Fig. 10 is a schematic diagram of the working principle of the fourth embodiment of the present invention. If the time sequence diagram shown in Fig. 9 is employed, in Fig. 10, there are three source nodes, S1, S2 and S3, respectively transmitting data x1(1), x2(1) and x3(1) at a first time slot, three relay nodes, R1, R2 and R3, being monitoring relay nodes at the first time slot, and a destination node D.

According to the time sequence diagram shown in Fig. 9.

At the first time slot:
the three source nodes, S1, S2 and S3, transmit the data x1(1), x2(1) and x3(1);
the relay nodes, R1, R2 and R3 and the destination node D receive the data x1(1), x2(1) and x3(1);
the relay nodes, R1, R2 and R3 and the destination node D demodulate and decode the received data x1(1), x2(1) and x3(1), and obtain decoding results;
for example, if the destination node D does not correctly decode the received data x1(1), x2(1) and x3(1), the decoding results corresponding to the data x1(1), x2(1) and x3(1) are all NACK;
and if the data x1(1) and x3(1) are correctly decoded by the destination node D and the data x2(1) is not correctly decoded by any relay node, the decoding results of the received data are sequentially: ACK NACK ACK for relay node R1, NACK NACKN NACK for relay node R2, and NACK NACK NACK for relay node R3.

Relay nodes R1, R2 and R3 transmit the decoding results to the destination node D.

The destination node D receives the ACK/NACK transmitted by the relay nodes, and determines the action of source nodes S1, S2 and S3 and relay nodes R1, R2 and R3 at the next time slot according to the decoding result NACK of its own.

For example, for source node S1, if the decoding result of the destination node is NACK and the result of decoding the data x1(1) of S1 by relay node R1 is ACK, the destination node D transmits ACK to source node S1, so that source node S1 transmits new data at the next time slot;
for source node S2, if the decoding result of the destination node is NACK and the results of decoding the data x2(1) of S2 by all the relay nodes are NACK, the destination node D transmits NACK to source node S2, so that source node S2 retransmits the data x2(1) at the next time slot;
for source node S3, if the decoding result of the destination node is NACK and the result of decoding the data x3(1) of S3 by relay node R1 is ACK, the destination node D transmits ACK to source node S3, so that source node S3 transmits new data at the next time slot;
furthermore, at the first time slot, if the relay nodes R2 and R3 decode incorrectly the data x1(1), x2(1) and x3(1) of all the source nodes S1, S2 and S3, the destination node D transmits ACK to the relay nodes R2 and R3, so that the relay nodes R2 and R3 are still in the monitoring state at the next time slot.

If the destination node D decodes all the data incorrectly and relay node R1 decodes x1(1) and x3(1) correctly, the destination node D transmits NACK to relay nodes R1, so that relay nodes R1 retransmits the data x1(1) and x3(1) at the next time slot.

As shown in Fig. 10, at the second time slot:
source node S2 retransmits data x2(1);
source nodes S1 and S3 transmit new data x1(2) and x3(2);
relay node R1 forwards x1(1) + x3(1); and
relay nodes R2 and R3 proceed with monitoring.

In this embodiment, in forwarding the data from source nodes S1 and S3 by relay node R1, the data from source nodes S1 and S3 are jointly encoded, and the encoded data are transmitted to the destination node D. The corresponding steps of processing at the destination node D are:
1) at time slot n (such as a time slot preceding the current time slot), the destination node D does not decode correctly the data from source nodes S1 and S3, and relay node R1 decodes correctly the data from source nodes S1 and S3; and the destination node D correspondingly stores the soft information of each bit of the data packets corresponding to source nodes S1 and S3;
2) at time slot n+k (such as the current time slot n+1, k may be greater than 1, as there exists a maximum number of times of retransmission), relay node R1 jointly encodes the source bits corresponding to source nodes S1 and S3, the manner of encoding being the same as that of encoding the data packets transmitted by source nodes S1 and S3 at the time slot n, which may be Turbo coding, or convolutional coding, etc.; and then the encoded data are transmitted to the destination node D;
3) after receiving the jointly encoded data x1(1)+x3(1) from relay node R1, the destination node D decodes the received jointly encoded data by combining corresponding bits that the stored soft information of the source bits corresponding to source nodes S1 and S3 with the jointly encoded source bit soft information, the manner of combining may be simple adding or weighted adding; and if the data are correctly decoded, the process of decoding is terminated, and ACK is transmitted to source nodes S1 and S3, so that source nodes S1 and S3 transmit new data at the next data;
   if the data are incorrectly decoded, turn to the next step;
4) the destination node D combines corresponding bits that the jointly encoded soft information of the source bits corresponding to source nodes S1 and S3 with the previously stored soft information of the source bits corresponding to source nodes S1 and S3, the manner of combining being simple adding or weighted adding, and decodes respectively the data packets corresponding to source nodes S1 and S3; and if all the data are correctly decoded, the process of decoding is terminated, and ACK is transmitted to source nodes S1 and S3, so that source nodes S1 and S3 transmit new data at the next data;
   If the data packet corresponding to one of the source nodes is only decoded correctly, turn to the next step; and
5) if the data packet corresponding to S1 (or S2) is decoded correctly, the obtained source bit soft information in the jointly encoded data corresponding to source node S1 (or S2) is replaced with the obtained source bits to which the decoded source node S1 (or S2) corresponds, and the newly obtained data packet is decoded; and if the decoding succeeds, the process of decoding is terminated, and ACK is transmitted to source nodes S1 and S3, so that source nodes S1 and S3 transmit new data at the next data;
   and if the decoding fails, the destination node D transmits ACK to source node S1 (or S2) corresponding to successful decoding, and transmits NACK to source node S2 (or S1) corresponding to failed decoding.

In the above embodiment, source node S1 is notified via ACK/NACK signalling denoting correct receiving; however, it is not limited thereto, and retransmission control information may also contain other information for different protocols, such as a codeword number for a retransmission request.

It can be seen from the above embodiment that the destination node D may decide action of the source node S and the relay node R at the next time slot according to a decoding result of data from the source node S at the current time slot and the decoding result of the data from the source node S at the current time slot transmitted by the relay node, so that the source node S transmits data at any time slot, avoiding waste of channel resources, with the method being good in compatibility.

Fig. 11 is a flowchart of the method for transmitting data of the fifth embodiment of the present invention. As shown in Fig. 11, the method comprises:
step 1101: receiving by a destination node at current time slot the data transmitted by at least one source node;
step 1102: demodulating and decoding the data transmitted by the at least one source node to obtain a decoding result; and
step 1103: notifying the decoding result to the at least one source node, so that the at least one source node decides to retransmit the data or transmit new data at the next time slot according to the decoding result transmitted by the destination node and the decoding result transmitted by a third relay node.

In this embodiment, in step 1102, the destination node D sends a decoding result back to the source node S, the decoding result being ACK/NACK signalling, denoting whether the data of the source node is decoded correctly.

Furthermore, in this embodiment, the third relay node also receives at the current time slot the data transmitted by the at least one source node, decodes the data to obtain a decoding result, and transmits the decoding result to the source node.

It can be seen from the above embodiment that after finishing the decoding, the destination node D transmits the decoding result to the source node, and feeds back ACK/NACK instructions via downlink signalling, indicating whether the data of the source node S are correctly decoded, so that the source node decides the action at the next time slot according to the decoding result fed back by the destination node D and the decoding result fed back by the relay node.

Furthermore, in this embodiment, the method comprises: receiving by the destination node D the decoding result transmitted by the third relay node that is obtained through demodulating and decoding the data that are transmitted by at least one source node and received at the current time slot;
wherein at the current time slot, the third relay node is in the monitoring state; and the destination node D notifies the relay node to retransmit the data of the source node at the next time slot or to be in a monitoring state according to the decoding result obtained through decoding the data transmitted by the source node and the decoding result of the third relay node.

It can be seen from the above embodiment that if the destination node D correctly decodes the data current transmitted by all the source nodes, all the current monitoring relay nodes shall still be in the monitoring state at the next time slot; and if a certain monitoring relay node does not decode correctly the data transmitted by any source node at the current time slot, the monitoring relay nodes shall still be in the monitoring state at the next time slot.

And if a certain monitoring relay node decodes correctly the codewords transmitted currently by a certain source node, while the destination node D does not decode correctly the codewords, the monitoring relay node becomes an alternative retransmission relay node. Wherein how to select an alternative retransmission relay node is as described in the first embodiment, and shall not be described any further.

It can be seen from the above embodiment that after receiving the decoding result transmitted by the third relay node, the destination node D may decide the action of the third relay node at the next time slot according only to the decoding result of itself and the decoding result transmitted by the third relay node, simplifying the procedure of processing by the destination node D.

For the ease of explanation, following description is given taking a source node S1 in the at least one source node as an example. The step of notifying the third relay node to retransmit the data of the source node or to be in the monitoring state by the destination node according to the result of decoding the data of the source nade S1 and the decoding result of the third relay node comprises:

Notifying by the destination node D, the third relay node which decodes the data of the source node S1, to be in a monitoring state at the next time slot if the result obtained by the destination node through decoding the source node S1 is correct, wherein ACK signalling may be transmitted to the third relay node to notify the third relay node to be in a monitoring state, and notifying by the destination node, the third relay node which correctly decodes the data of the source node S1, to retransmit the data at the next time slot if the result obtained by the destination node through decoding the source node S1 is incorrect and the result obtained by the third relay node through decoding the source node S1 is correct, wherein NACK signalling may be transmitted to the third relay node to notify the third relay node to retransmit the data.

It can be seen from the above embodiment that the third relay node may transmit ACK/NACK signalling, so as to respectively notify the source node S and the destination node D whether the decoding is correct. In this way, both the source node S and the destination node D may learn the decoding results of each of the monitoring relay nodes. In this case, the destination node controls the action of each third relay node according to the decoding result of itself and the decoding result from the third relay node.

An embodiment of the present invention further provides a destination node, as described in the embodiment below. As the principle of the destination node for solving problems is similar to that of the method for transmitting data of the fifth embodiment, the implementation of the method may be referred to for the implementation of the destination node, and the repeated parts shall not be described herein any further.

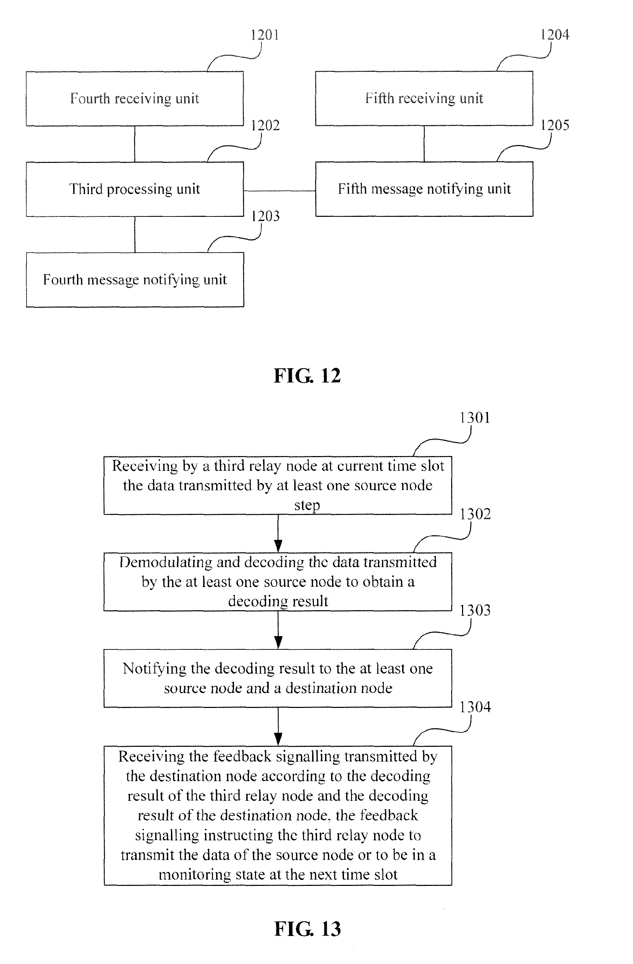

Fig. 12 is a schematic structural diagram of the destination node of the sixth embodiment of the present invention. As shown in Fig. 12, the destination node comprises:
a fourth receiving unit 1201 to receive at current time slot the data transmitted by at least one source node;
a third processing unit 1202 to demodulate and decode the data transmitted by the at least one source node to obtain a decoding result; and
a fourth message notifying unit 1203 to notify the at least one source node the decoding result of the third processing unit, so that the at least one source node decides to retransmit the data or transmit new data at the next time slot according to the decoding result transmitted by the destination node and the decoding result transmitted by the third relay node.

Furthermore, the destination node comprises:
a fifth receiving unit 1204 to receive the decoding result transmitted by the third relay node obtained through demodulating and decoding the data transmitted by at least one source node and received at the current time slot; and
a fifth message notifying unit 1205 to notify the third relay node to retransmit the data of the source node or to be in a monitoring state at the next time slot according to the decoding result of the third processing unit and the decoding result received by the fifth receiving unit.

In this embodiment, the process that the destination node decides the action of the third relay node at the next time slot according to the decoding result of the third relay node and the decoding result of itself is as described in the fifth embodiment, which shall not be described herein any further.

It can be seen from the above embodiment that the third relay node R may transmit ACK/NACK signalling, so as to respectively notify the source node S and the destination node D whether the decoding is correct. In this way, both the source node S and the destination node D may learn the decoding results of each of the monitoring relay nodes. In this case, the destination node controls the action of each third relay node according to the decoding result of itself and the decoding result from the third relay node.

Fig. 13 is a flowchart of the method for transmitting data of the seventh embodiment of the present invention. As shown in Fig. 13, the method comprises:
step 1301: receiving, by a third relay node at current time slot, the data transmitted by at least one source node;
steep 1302: demodulating and decoding the data transmitted by the at least one source node to obtain a decoding result;
step 1303: notifying the decoding result to the at least one source node and a destination node; and
step 1304: receiving the feedback signalling transmitted by the destination node according to the decoding result of the third relay node and the decoding result of the destination node, the feedback signalling instructing the third relay node to transmit the data of the source node or to be in a monitoring state at the next time slot.

Wherein the third relay node notifies the decoding results to the destination node and the at least one source node at the same time, or the third relay node notifies the at least one source node and the destination node in a temporal order from the beginning to the end.

In the above embodiment, the third relay node is a monitoring relay node.

The retransmission relay nodes are similar to those in the fourth embodiment, and shall not be described any further.

An embodiment of the present invention further provides a relay node, as described in the embodiment below. As the principle of the relay node for solving problems is similar to that of the method for transmitting data of the seventh embodiment, the implementation of the method may be referred to for the implementation of the relay node, and the repeated parts shall not be described herein any further.

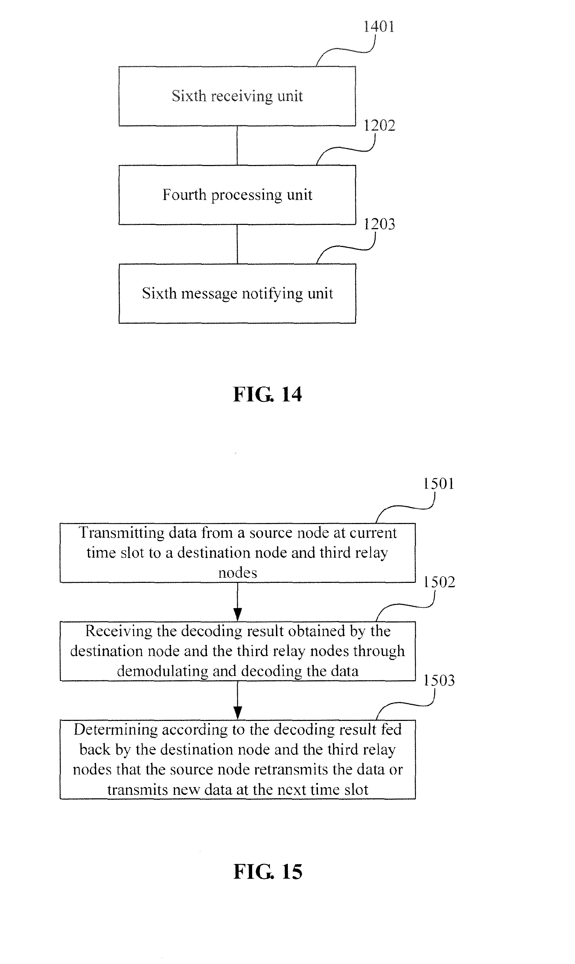

Fig. 14 is a schematic structural diagram of the relay node of the eighth embodiment of the present invention. The relay node comprises:
a sixth receiving unit 1401 to receive at current time slot the data transmitted by at least one source node;
a fourth processing unit 1402 to demodulate and decode the data received by the sixth receiving unit 1401 to obtain a decoding result; and
a sixth message notifying unit 1403 to notify the at least one source node and the destination node the decoding result of the fourth processing unit 1402, so that the source node can decide to retransmit the data or transmit new data at the next time slot according to the decoding result of the notifying unit 1403 and the decoding result transmitted by the destination node, thereby causing the destination node to notify the relay node to transmit the data of the source node or to be in a monitoring state at the next time slot according to the decoding result of the notifying unit and the decoding result of the destination node.

In this embodiment, the relay node is a monitoring relay node.

For the retransmission relay node at the current time slot, the retransmission relay node may comprise: a data transmitting unit configured to transmit at the current time slot the data transmitted by a node at the last time slot; and a message processing unit configured to decide its action at the next time slot according to the signalling (ACK/NACK) fed back by the destination node D. For example, if the destination node decodes correctly the data transmitted by a certain retransmission relay node at the current time slot, the retransmission relay node is changed into a monitoring state at the next time slot; otherwise, the retransmission relay node proceeds with retransmitting the codewords at the next time slot. When there exist multiple source nodes, it is possible that a monitoring relay node correctly decodes the data of the multiple source nodes. Hence, it is possible that the retransmission relay node simultaneously forwards multiple data. At this moment, if the destination node D correctly decodes only a part of the data forwarded by the retransmission relay node, the relay node proceeds with retransmitting the data that are not correctly decoded by the destination node D at the next time slot.

Fig. 15 is a flowchart of the method for transmitting data of the ninth embodiment of the present invention. As shown in Fig. 15, the method comprises:
step 1501: transmitting data from a source node at current time slot to a destination node and third relay nodes;
step 1502: receiving the decoding result obtained by the destination node and the third relay nodes through demodulating and decoding the data; and
step 1503: determining according to the decoding result fed back by the destination node and the third relay nodes that the source node retransmits the data or transmits new data at the next time slot.

Wherein in step 1503, if the result of decoding the data transmitted by The source node at the current time slot by the destination node or at least one of the third relay nodes is correct, the source node determines to transmit new data at the next time slot;
and if the results of decoding the data transmitted by the source node at the current time slot by the destination node and at least one of the third relay nodes are incorrect, the source node determines to retransmit at the next time slot the data transmitted at the current time slot.

An embodiment of the present invention further provides a source node, as described in the embodiment below. As the principle of the source node for solving problems is similar to that of the method for transmitting data of the ninth embodiment, the implementation of the method may be referred to for the implementation of the source node, and the repeated parts shall not be described herein any further.

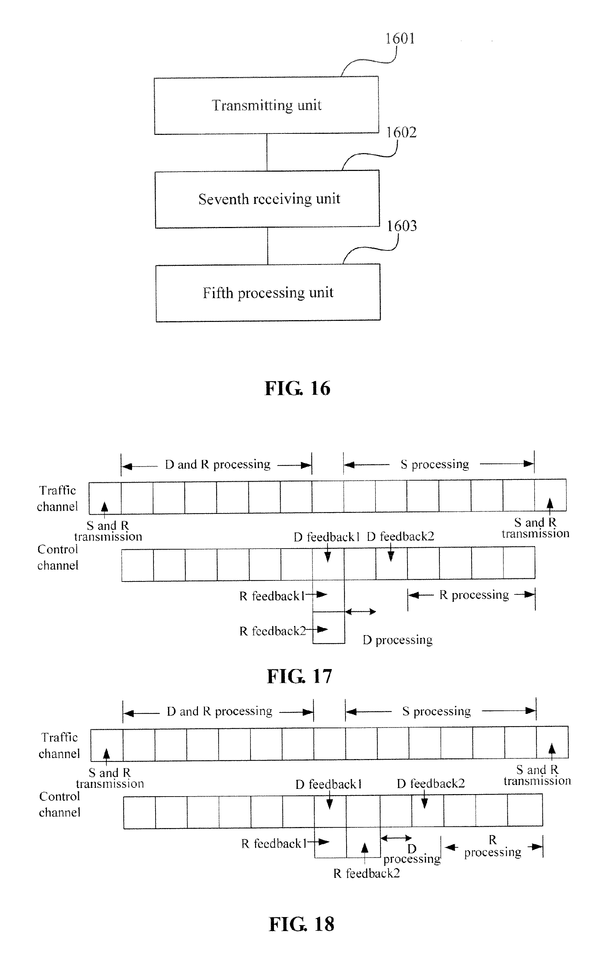

Fig. 16 is a schematic structural diagram of the source node of the tenth embodiment of the present invention. As shown in Fig. 10, the source node comprises:
a transmitting unit 1601 to transmit data at current time slot to a destination node and third relay nodes;
a seventh receiving unit 1602 to receive the decoding result obtained by the destination node and the third relay nodes through demodulating and decoding the data; and
a fifth processing unit 1603 to determine according to the decoding result received by the seventh receiving unit 1602 that the source node retransmits the data or transmits new data at the next time slot.

It can be seen from the above embodiment that the destination node D may decide action of the relay node R at the next time slot according to a decoding result of data from the source node S at the current time slot and the decoding result of the data from the source node S at the current time slot transmitted by the relay node; and the source node S may decide the action of itself at the next time slot according to the decoding result of the destination node and the decoding result transmitted by the relay node, so that the source node S transmits data at any time slot, avoiding waste of channel resources, with the method being good in compatibility.

The eleventh embodiment of the present invention further provides a wireless communication system. As shown in Fig. 2, the wireless communication system comprises a source node, relay nodes and a destination node; wherein the relay nodes may comprise a monitoring relay node and a retransmission relay node.

The source node, relay nodes and destination node are as described in the sixth, eighth and tenth embodiments, and the operational processes of them are as described in the fifth, seventh and ninth embodiments, which shall not be described herein any further.

The methods for transmitting data of the embodiments of the present invention shall be described below with reference to Figs. 10 and 17-19.

In the time sequence diagram shown in Fig. 17, if a control channel is separated in an uplink (from S to D) and downlink (from D to S) duplexing manner, it may be operated in the time sequence shown in Fig. 17. After finishing the decoding, the destination node D feeds back at once an ACK/NACK instruction via a downlink signalling channel, denoting whether itself decodes the codewords of S correctly. At the same time, R transmits ACK/NACK instructions in the uplink and downlink control channels, so as to respectively notify S and D of whether itself decodes correctly. And D also monitors the signalling in the uplink control channel while transmitting signalling in the downlink control channel. In this way, both S and D may learn the decoding results of each of the monitoring relay nodes. "D feedback 2" in the time sequence is only for the relay nodes, and is used for controlling the action of each of the relay nodes.

The source node S needs to possess an ability to receive ACK/NACK instructions from different nodes. Such an ability exists in many systems. For example, in a cellular system supporting soft handover, the user may receive control instructions from different base stations at the same time.

At the first time slot:
as shown in Fig. 10, "S and R transmission": the three source nodes, S1, S2 and S3, transmit the data x1(1), x2(1) and x3(1); furthermore, at the current time slot, the retransmission relay nodes transmit to the destination node D the data of the source nodes at the last time slot; wherein the destination node decodes the data incorrectly, and the relay nodes decode the data correctly;
"D and R processing": the relay nodes, R1, R2 and R3 and the destination node D receive the data x1(1), x2(1) and x3(1);
the relay nodes, R1, R2 and R3 and the destination node D demodulate and decode the received data x1(1), x2(1) and x3(1), and obtain decoding results;
for example, if the destination node D does not correctly decode the received data x1(1), x2(1) and x3(1), the decoding results corresponding to the data x1(1), x2(1) and x3(1) are all NACK;
and if the data x1(1) and x3(1) are correctly decoded by the relay nodes R1 and the data x2(1) is not correctly decoded by any relay node, the results of decoding the received data are sequentially: ACK NACK ACK for relay node R1, NACK NACKN NACK for relay node R2, and NACK NACK NACK for relay node R3.

"D feedback 1, R feedback 1, R feedback 2": D feeds the decoding results NACK NACK NACK back to the source nodes S1, S2 and S3, and the relay nodes R1, R2 and R3 transmit the decoding results to the destination node D and corresponding source nodes S1, S2 and S3.

"D processing": the destination node D receives the ACK/NACK corresponding to the source nodes S1, S2 and S3 transmitted by the relay nodes, and determines the action of relay nodes R1, R2 and R3 at the next time slot according to the decoding result NACK of its own.

"D feedback 2": the destination node D notifies each of the relay nodes of the processing results of "D processing"; for example, if the relay nodes R2 and R3 incorrectly decode the data x1(1), x2(1) and x3(1) transmitted by all the source nodes S1, S2 and S3, the destination node D transmits ACK to the relay nodes R2 and R3, so that the relay nodes R2 and R3 are still in the monitoring state at the next time slot.

If the destination node D decodes all the data incorrectly and relay node R1 decodes x1(1) and x3(1) correctly, the destination node D transmits NACK to relay node R1, so that relay node R1 retransmits the data x1(1) and x3(1) at the next time slot.

"S processing": when the source nodes S1, S2 and S3 receives the decoding results of the destination node D and the relay nodes R1, R2 and R3, the source nodes may decide the action of themselves at the next time slot according to the decoding results.

For source node S1, if the decoding result of the destination node is NACK and the result of decoding the data x1(1) of S1 by relay node R1 is ACK, the source node S1 determines to transmit new data at the next time slot;
for source node S2, if the decoding result of the destination node is NACK and the results of decoding the data x2(1) of S2 by all the relay nodes are NACK, the source node S2 transmits NACK to determine to retransmit the data x2(1) at the next time slot;
for source node S3, if the decoding result of the destination node is NACK and the result of decoding the data x3(1) of S3 by relay node R1 is ACK, the source node S3 determines to transmit new data at the next time slot.

As shown in Fig. 10, at the second time slot:
source node S2 retransmits data x2(1);
source nodes S1 and S3 transmit new data R1(2) and x3(2);
relay node R1 forwards x1(1) + x3(1); and
relay nodes R2 and R3 proceed with monitoring.

As shown in Fig. 18, if the control channels are shared and without being separated in an uplink and downlink duplexing manner, the monitoring relay nodes cannot send out signalling in different directions at the same time, and the destination node D cannot monitor the signalling sent by the relay nodes while transmitting the signalling. At this moment, the manner of operation shown in Fig. 18 may be employed. The relay nodes repeat the ACK/NACK instructions. And the destination node D is changed into a state of receiving signalling, so as to learn the decoding states of each of the monitoring relay nodes.

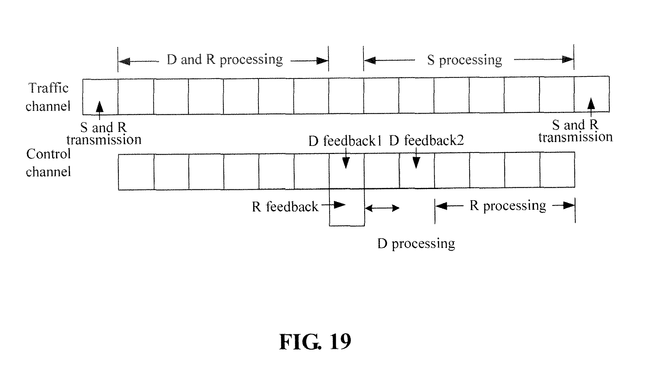

As shown in Fig. 19, if there is only a single source node, the time sequence diagram shown in Fig. 18 may be further simplified as the time sequence diagram shown in Fig. 19.

Wherein, if the destination node D or the monitoring relay nodes decodes (decode) the data of the source node S correctly, an ACK instruction is sent to the source node S; and if the decoding fails, no signalling is sent.

If the destination node D fails in decoding, it is changed into the state of receiving signalling, so as to monitor the signalling of the relay nodes.

If the source node S receives any ACK, new data are transmitted at the next time slot; and if there is no ACK instruction, it is understood as NACK, and data are retransmitted at the next moment.

In transmitting the ACK instruction, although the destination node D cannot monitor the instructions of the relay nodes, it needs not to learn whether the relay nodes decode correctly when the destination node D decodes correctly; hence, no monitoring is needed.

It can be seen from the above embodiment that the destination node D may decide action of the relay node R at the next time slot according to a decoding result of data from the source node S at the current time slot and the decoding result of the data from the source node S at the current time slot transmitted by the relay node; and the source node S may decide the action of itself at the next time slot according to the decoding result of the destination node and the decoding result transmitted by the relay node, so that the source node S transmits data at any time slot, avoiding waste of channel resources, with the method being good in compatibility.

An embodiment of the present invention further provides a computer-readable program, wherein when the program is executed in a destination node, the program enables the computer to carry out the method for transmitting data as described in the first and fifth embodiments in the destination node.

An embodiment of the present invention further provides a storage medium in which a computer-readable program is stored, wherein the computer-readable program enables the computer to carry out the method for transmitting data as described in the first and fifth embodiments in a destination node.

An embodiment of the present invention further provides a computer-readable program, wherein when the program is executed in a relay node, the program enables the computer to carry out the method for transmitting data as described in the seventh embodiment in the relay node.

An embodiment of the present invention further provides a storage medium in which a storage medium in which a computer-readable program is stored, wherein the computer-readable program enables the computer to carry out the method for transmitting data as described in the seventh embodiment in a relay node.

An embodiment of the present invention further provides a computer-readable program, wherein when the program is executed in a source node, the program enables the computer to carry out the method for transmitting data as described in the ninth embodiment in the source node.

An embodiment of the present invention further provides a storage medium in which a storage medium in which a computer-readable program is stored, wherein the computer-readable program enables the computer to carry out the method for transmitting data as described in the ninth embodiment in a source node.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above in connection with particular embodiments. However, those skilled in the art should be understood that such description is illustrative only, and is not intended to limit the protection scope of the present invention. Various variants and modifications may be made by those skilled in the art in accordance with the spirits and principle of the present invention, and such variants and modifications fall within the scope of the present invention.

## Claims

1. A method for transmitting data, comprising:
receiving by a destination node at current time slot the data transmitted by at least one source node;
demodulating and decoding the data transmitted by the at least one source node to obtain a decoding result;
receiving the decoding result transmitted by first relay nodes, the decoding result being obtained by the first relay nodes through demodulating and decoding the data transmitted by the at least one source node and received at the current time slot; and
notifying the source node to retransmit the data or transmit new data at the next time slot by the destination node according to the result of the demodulating and decoding of the data of the source node and the decoding result of the first relay nodes.

2. The method according to claim 1, wherein as to one source node of the at least one source node, the notifying the source node to retransmit the data or transmit new data at the next time slot by the destination node according to the result of the demodulating and decoding of the data of the source node and the decoding result of the first relay nodes comprises:
notifying the one source node to transmit new data at the next time slot by the destination node if the decoding result of the data transmitted by the one source node at the current time slot that is obtained by the destination node or at least one of the first relay nodes is correct.

3. The method according to claim 1, wherein as to one source node of the at least one source node, the notifying the source node to retransmit the data or transmit new data at the next time slot by the destination node according to the result of the demodulating and decoding of the data of the source node and the decoding result of the first relay nodes comprises:
notifying the one source node to transmit new data at the next time slot by the destination node if the decoding result of the data transmitted by the one source node at the current time slot that is obtained by the destination node is correct and the decoding result of the data transmitted by the one source node at the current time slot that is obtained by the first relay nodes is incorrect.

4. The method according to claim 1, wherein as to one source node of the at least one source node, the notifying the source node to retransmit the data or transmit new data at the next time slot by the destination node according to the result of the demodulating and decoding of the data of the source node and the decoding result of the first relay nodes comprises:
notifying the one source node to transmit new data at the next time slot by the destination node if the decoding result of the data transmitted by the one source node at the current time slot that is obtained by the destination node is incorrect and the decoding result of the data transmitted by the one source node at the current time slot that is obtained by at least one of the first relay nodes is correct.

5. The method according to claim 4, wherein the method further comprises:
notifying the first relay nodes that correctly decode the data of the one source node to retransmit the data of the one source node at the next time slot by the destination node.

6. The method according to claim 1, wherein as to one source node of the at least one source node, the notifying the source node to retransmit the data or transmit new data at the next time slot by the destination node according to the result of the demodulating and decoding of the data of the source node and the decoding result of the first relay nodes comprises:
notifying the one source node to retransmit at the next time slot the data transmitted at the current time slot by the destination node if both of the decoding results of the data transmitted by the one source node at the current time slot that are obtained by the destination node and the first relay nodes are incorrect.

7. The method according to claim 5, wherein the notifying the first relay nodes that correctly decode the data of the one source node to retransmit the data of the one source node at the next time slot by the destination node comprises:
determining a set of the first relay nodes that correctly decode the data of the one source node by the destination node according to the decoding result of the first relay nodes; and
selecting one first relay node from the set of the first relay nodes and notifying the selected one first relay node to transmit the data of the one source node at the next time slot.

8. The method according to claim 7, wherein the selecting one first relay node from the set of the first relay nodes comprises:
selecting a first relay node of good quality from the set of the first relay nodes, or selecting a first relay node from the set of the first relay nodes that correctly decodes the data transmitted by a number of source nodes.

9. The method according to claim 1, wherein when the destination node receives the data transmitted by at least one source node, the method further comprises:
receiving the data transmitted by a second relay node by the destination node, the data transmitted by the second relay node being those that are transmitted by the second relay node notified by the destination node at the last time slot;
decoding the data transmitted by the second relay node; and
notifying the source nodes to which the data transmitted by the second relay node belong to transmit new data at the next time slot, or notifying the source nodes to which the data transmitted by the second relay node belong to retransmit the data at the next time slot, or notifying part of the source nodes to which the data transmitted by the second relay node belong to transmit new data at the next time slot and notifying the other part of the source nodes to retransmit the data at the next time slot, according to the decoding result.

10. The method according to claim 9, wherein if the data transmitted by the second relay node to the destination node are data of more than one source nodes and the second relay node jointly encodes the source bits of the more than one source nodes, the decoding the data transmitted by the second relay node comprises:
combining corresponding bitsthat the soft information of the source bits of the more than one source nodes stored at the last time slot and the soft information of the jointly encoded source bits of the more than one source nodes transmitted at the current time slot by the second relay node to the destination node;
decoding the received jointly encoded data; and
terminating the decoding by the destination node if the decoding succeeds, and notifying the more than one source nodes to transmit new data at the next time slot by the destination node according to the decoding result.

11. The method according to claim 10, wherein if the decoding fails, the method further comprises:
combining corresponding bits by the destination node that the soft information of the jointly encoded source bits of the more than one source nodes transmitted by the second relay node and the respective soft information of the source bits of the more than one source nodes stored at the last time slot;
decoding respectively the data corresponding to the more than one source nodes; and
terminating the decoding by the destination node if the decoding succeeds completely, and notifying the more than one source nodes to transmit new data at the next time slot by the destination node according to the decoding result.

12. The method according to claim 11, wherein if the decoding result obtained through decoding respectively the data corresponding to the more than one source nodes is that the decoding the data of one of the more than one source nodes succeeds, the method further comprises:
replacing the soft information of the sources bits of the source nodes to which the correctly decoded data in the received jointly encoded data belong with the decoded source bits of the respective source nodes to obtain new data;
decoding the new data; and
terminating the decoding by the destination node if the decoding succeeds, and notifying the corresponding source node that correctly decodes to transmit new data at the next time slot by the destination node; and retransmitting corresponding data at the next time slot by the corresponding source node that incorrectly decodes according to the decoding result; and
terminating the decoding by the destination node if the decoding fails, and notifying the at least one source node to retransmit corresponding data at the next time slot by the destination node according to the decoding result.

13. A destination node, comprising:
a first receiving unit to receive at current time slot the data transmitted by at least one source node;
a first processing unit to demodulate and decode the data transmitted by the at least one source node and received by the first receiving unit to obtain a decoding result;
a second receiving unit to receive the decoding result transmitted by first relay nodes, the decoding result being obtained by the first relay nodes through demodulating and decoding the data transmitted by the at least one source node and received at the current time slot; and
a first message notifying unit to notify the at least one source node to retransmit the data or transmit new data at the next time slot according to the decoding result of the first processing unit and the decoding result received by the second receiving unit.

14. A wireless communication system, comprising:
a source node to transmit data;
a first relay node to receive the data transmitted by the source node and to demodulate and decode the data to obtain a decoding result and transmit the decoding result; and
a destination node to receive the data transmitted by the source node and to demodulate and decode the data to obtain a decoding result; and to receive the decoding result transmitted by the relay node, and to notify the one source node to retransmit the data or transmit new data at the next time slot according to the decoding result obtained through demodulating and decoding the data of the source node and the decoding result of the first relay node.

15. The wireless communication system according to claim 14, wherein the destination node further comprises a second relay node to transmit to the destination node the data that are transmitted at the last time slot by the second relay node which is notified by the destination node.

16. A method for transmitting data, comprising:
receiving by a destination node at current time slot the data transmitted by at least one source node;
demodulating and decoding the data transmitted by the at least one source node to obtain a decoding result; and
notifying the decoding result to the at least one source node, so that the at least one source node decides to retransmit the data or transmit new data at the next time slot according to the decoding result transmitted by the destination node and the decoding result transmitted by a third relay node.

17. The method according to claim 16, wherein the method further comprises:
receiving by the destination node the decoding result transmitted by the third relay node that is obtained through demodulating and decoding the data that are transmitted by at least one source node and received at the current time slot; and
notifying the third relay node to retransmit the data of the source node at the next time slot or to be in a monitoring state by the destination node according to the decoding result obtained through decoding the data transmitted by the source node and the decoding result of the third relay node.

18. The method according to claim 19, wherein as to one source node of the at least one source node, the notifying the third relay node to retransmit the data of the source node at the next time slot or to be in a monitoring state by the destination node according to the decoding result obtained through decoding the data transmitted by the source node and the decoding result of the third relay node comprises:
notifying by the destination node the third relay node which decodes the data of the one source node to be in a monitoring state at the next time slot if the decoding result obtained by the destination node through decoding the one source node is correct, and notifying by the destination node the third relay node which correctly decodes the data of the one source node to retransmit the data at the next time slot if the decoding result obtained by the destination node through decoding the one source node is incorrect and the decoding result obtained by the third relay node through decoding the one source node is correct.

19. A method for transmitting data, comprising:
receiving by a third relay node at current time slot the data transmitted by at least one source node;
demodulating and decoding the data transmitted by the at least one source node to obtain a decoding result;
notifying the decoding result to the at least one source node and a destination node; and
receiving the feedback signalling transmitted by the destination node according to the decoding result of the third relay node and the decoding result of the destination node, the feedback signalling instructing the third relay node to transmit the data of the source node or to be in a monitoring state at the next time slot.

20. The method according to claim 19, wherein the third relay node notifies the destination node and the at least one source node at the same time, or the third relay node notifies the at least one source node and the destination node in a temporal order from the beginning to the end.

21. A method for transmitting data, comprising:
transmitting data from a source node at current time slot to a destination node and third relay nodes;
receiving the decoding result obtained by the destination node and the third relay nodes through demodulating and decoding the data; and
determining according to the decoding result fed back by the destination node and the third relay nodes that the source node retransmits the data or transmits new data at the next time slot.

22. The method according to claim 21, wherein the determining according to the decoding result fed back by the destination node and the third relay nodes that the source node retransmits the data or transmits new data at the next time slot comprises:
determining by the source node to transmit new data at the next time slot if the decoding result obtained by the destination node or at least one of the third relay nodes through decoding the data transmitted by the source node is correct;
determining by the source node to retransmit the data at the next time slot that are transmitted at the current time slot if both of the decoding results obtained by the destination node and at least one of the third relay nodes through decoding the data transmitted at the current time slot by the source node are incorrect.

23. A destination node, comprising:
a fourth receiving unit to receive at current time slot the data transmitted by at least one source node;
a third processing unit to demodulate and decode the data transmitted by the at least one source node to obtain a decoding result; and
a fourth message notifying unit to notify the at least one source node the decoding result of the third processing unit, so that the at least one source node decides to retransmit the data or transmit new data at the next time slot according to the decoding result transmitted by the destination node and the decoding result transmitted by the third relay node.

24. A relay node, comprising:
a sixth receiving unit to receive at current time slot the data transmitted by at least one source node;
a fourth processing unit to demodulate and decode the data received by the sixth receiving unit to obtain a decoding result; and
a sixth message notifying unit to notify the at least one source node and the destination node the decoding result of the fourth processing unit, so that the source node to decide to retransmit the data or transmit new data at the next time slot according to the decoding result of the notifying unit and the decoding result transmitted by the destination node, thereby causing the destination node to notify the relay node to transmit the data of the source node or to be in a monitoring state at the next time slot according to the decoding result of the notifying unit and the decoding result of the destination node.

25. A source node, comprising:
a transmitting unit to transmit data at current time slot to a destination node and third relay nodes;
a seventh receiving unit to receive the decoding result obtained by the destination node and the third relay nodes through demodulating and decoding the data; and
a fifth processing unit to determine according to the decoding result received by the seventh receiving unit that the source node retransmits the data or transmits new data at the next time slot.

26. A computer-readable program, wherein when the program is executed in a destination node, the program enables the computer to carry out the method for transmitting data as claimed in any of claims 1-12 and 16-18 in the destination node.

27. A storage medium in which a computer-readable program is stored, wherein the computer-readable program enables the computer to carry out the method for transmitting data as claimed in any of claims 1-12 and 16-18 in a destination node.

28. A computer-readable program, wherein when the program is executed in a relay node, the program enables the computer to carry out the method for transmitting data as claimed in claim 19 or 20 in the relay node.

29. A storage medium in which a computer-readable program is stored, wherein the computer-readable program enables the computer to carry out the method for transmitting data as claimed in claim 19 or 20 in a relay node.

30. A computer-readable program, wherein when the program is executed in a source node, the program enables the computer to carry out the method for transmitting data as claimed in claim 21 or 22 in the source node.

31. A storage medium in which a computer-readable program is stored, wherein the computer-readable program enables the computer to carry out the method for transmitting data as claimed in claim 21 or 22 in a source node.
